# FASCICULE DE BREVET EUROPEEN

(11) **EP 2 145 749 B1**
(45) Date de publication et mention de la délivrance du brevet: **10.11.2010**
(21) Numéro de dépôt: 09165242.0
(22) Date de dépôt: 10.07.2009
(51) Int. Cl.: B29C 49/48, B29C 49/78, B29C 49/42

(54) **Installation de soufflage de corps creux comprenant un circuit de fluide thermorégulé sous pression**
Vorrichtung zum Blasformen von Hohlkörpern mit einem Kreislauf von temperaturgeregelter Flüssigkeit unter Druck
Apparatus for blow moulding hollow bodies comprising a circuit of temperature controlled fluid under pressure

(30) Priorité: 18.07.2008 FR 0854899
(43) Date de publication de la demande: 20.01.2010
(73) Titulaire: Sidel Participations, 76930 Octeville Sur Mer (FR)
(72) Inventeur: Leblond, Roland, 76930, OCTEVILLE-SUR-MER (FR)
(74) Mandataire: Cabinet Plasseraud

(56) Documents cités:
- DE-C1- 3 613 543
- FR-A- 2 877 872
- US-A1- 2008 136 068

## Description

La présente invention porte, de facon générale, sur une installation de soufflage de corps creux, notamment de récipients tels que des bouteilles, en matière thermoplastique, notamment en PET, installation dans laquelle est prévu au moins un support de moule auquel peut être solidarisé un moule de soufflage amovible. L'invention concerne notamment une installation du type précité comprenant un carrousel tournant à la périphérie duquel est prévue une pluralité de supports de moules auxquels peuvent être solidarisés une pluralité de moules de soufflage amovibles respectifs (voir par exemple le document DE 36 13 543 C1).

De manière plus précise, l'invention s'applique préférentiellement, bien que non exclusivement, au soufflage de corps creux remplissables à chaud, c'est-à-dire de corps creux, notamment de bouteilles, qui doivent ensuite être remplis d'un liquide chaud (stérilisation) ou qui doivent, après remplissage et fermeture, subir un traitement thermique (pasteurisation).

Afin de permettre le soufflage de ces corps creux, qui sont soufflés à partir de préformes en matière thermoplastique préalablement chauffées dans un four de conditionnement thermique à une température supérieure à leur température de transition vitreuse mais inférieure à leur température de cristallisation, il est nécessaire de chauffer les moules par une circulation d'un fluide thermorégulé sous pression (par exemple de l'eau, dont la température peut atteindre jusqu'à 90°, ou de l'huile, dont la température peut atteindre 140°), ce circuit étant en partie formé dans le moule et en partie formé dans le support respectif du moule.

Pour permettre une modification rapide des caractéristiques d'une chaîne de production en vue de fabriquer des corps creux différents, il est nécessaire de pouvoir changer rapidement les moules ; il est donc nécessaire de prévoir des moyens de raccordement fluidique du moule au support de moule respectif pour pouvoir assurer la continuité du circuit précité.

Cependant, le fluide thermorégulé étant sous pression dans le circuit, il existe des risques de projection de ce fluide hors du support lors de la désolidarisation du moule de son support respectif. Pour y remédier, il est connu d'équiper le circuit de moyens de fermeture automatique. En général, ces moyens de fermeture automatique sont actionnés automatiquement lors de chaque arrêt de l'installation de soufflage (par exemple lors d'un arrêt d'urgence ou lors d'un arrêt pour permettre des opérations de maintenance sur l'installation). Ces moyens de fermeture automatique se déclenchent également quand l'agent de maintenance ouvre les portes permettant d'accéder au coeur de l'installation de soufflage.

Néanmoins, malgré la présence de ces moyens de fermeture automatique, il existe encore des risques de projection du fluide chaud sous pression hors du support lors de la désolidarisation du moule dans le cas d'un dysfonctionnement de ces moyens de fermeture et en présence de la pression résiduelle dans le moule.

Par ailleurs, le fluide thermorégulé restant sous pression dans le circuit après la désolidarisation du moule de son support respectif, il est relativement difficile de solidariser de nouveau le moule sur son support respectif, car il est alors nécessaire d'exercer un effort de contrepression important.

Pour écarter cet inconvénient et éviter que le fluide thermorégulé reste sous pression dans le circuit formé en partie dans le support, il est connu de prévoir une vanne permettant de purger une partie du fluide thermorégulé dans le circuit, le fluide purgé étant alors généralement rejeté et perdu. Cette solution n'est donc, elle aussi, pas satisfaisante, notamment quand le fluide thermorégulé est de l'huile dont la température peut être supérieure à 100°C, car il existe toujours, lors de cette purge, des risques de projection de liquide et de brûlure de l'agent de maintenance. De plus, cette solution n'est pas satisfaisante d'un point de vue environnemental.

Il existe donc un intérêt dans la pratique pour que, dans les installations de moulage concernées, le ou chaque moule soit équipé d'un circuit de fluide thermorégulé sous pression agencé de manière à réduire les risques de projection du fluide chaud sous pression lors de la désolidarisation du moule de son support respectif tout en facilitant la solidarisation du moule sur son support.

A ces fins, l'invention propose de perfectionner une installation de soufflage de corps creux, notamment de récipients tels que des bouteilles, en matière thermoplastique, comprenant au moins un support de moule auquel peut être solidarisé un moule amovible respectif par l'intermédiaire de moyens de raccordement fluidique, cette installation comprenant au moins un circuit de fluide thermorégulé sous pression formé à travers ledit support et ledit moule respectif, des moyens de fermeture automatique dudit circuit étant prévus dans au moins ledit support,
laquelle installation, étant agencée conformément à l'invention, se **caractérise en ce qu**'elle comprend :
- au moins une enceinte qui comporte au moins une chambre à volume variable raccordée de manière fluidique audit circuit de fluide thermorégulé sous pression, et
- des moyens générateurs de fluide auxiliaire sous une pression réglable pouvant varier entre une pression maximale sensiblement égale à la pression du fluide thermorégulé sous pression présent dans ledit circuit et une pression minimale sensiblement égale à la pression atmosphérique, lesdits moyens générateurs étant connectés à ladite enceinte à l'extérieur de ladite chambre de manière que ladite chambre à volume variable soit soumise à la contre-pression dudit fluide auxiliaire à pression réglable.

Grâce à cet agencement, avant que le moule soit désolidarisé de son support respectif, la contre-pression dudit fluide auxiliaire peut être abaissée de sa pression maximale à sensiblement sa pression minimale et le fluide thermorégulé sous pression peut se détendre dans ladite chambre à volume variable jusqu'à ce que sa pression atteigne sensiblement la pression atmosphérique. On réduit ainsi les risques de projection du fluide thermorégulé sous pression hors du support lorsque le moule est désolidarisé de son support respectif alors que lesdits moyens de fermeture automatique dudit circuit sont en dysfonctionnement.

Dans un mode de réalisation intéressant, on fait en sorte que ladite enceinte comprenne une paroi interne mobile séparant ladite enceinte en deux chambres de volumes respectifs variables, ladite première chambre étant connectée de manière fluidique audit circuit de fluide thermorégulé sous pression et une seconde chambre étant connectée de manière fluidique auxdits moyens générateurs de fluide auxiliaire sous une pression réglable.

Dans un exemple possible de mise oeuvre, ladite enceinte peut être une vessie comportant une membrane interne déformable délimitant lesdites première et seconde chambres. Toutefois, il semble plus intéressant que ladite enceinte soit une enceinte sensiblement rigide. Dans ce cas, une possibilité consiste en ce que ladite enceinte soit une enceinte sensiblement rigide comportant une membrane interne déformable délimitant lesdites première et seconde chambres. Une autre possibilité intéressante consiste en ce que ladite enceinte soit une enceinte sensiblement rigide comportant une paroi interne déplaçable délimitant lesdites première et seconde chambres ; un exemple préféré de réalisation peut alors consister en ce que ladite enceinte soit agencée sous forme d'un vérin avec un piston délimitant lesdites première et seconde chambres.

Dans un exemple de réalisation pratique et simple à réaliser et à mettre en oeuvre, on prévoit que lesdits moyens générateurs de fluide auxiliaire soient du type à fonctionnement tout ou rien, propre sélectivement soit à délivrer un fluide auxiliaire sous une pression sensiblement égale à la pression du fluide thermorégulé dans ledit circuit de circulation de fluide thermorégulé, soit à raccorder ladite seconde chambre à l'atmosphère. Dans ce cas, une réalisation concrète peut consister en ce que lesdits moyens générateurs de fluide auxiliaire comprennent :
- un générateur de fluide auxiliaire sous une pression sensiblement égale à la pression du fluide thermorégulé dans ledit circuit de circulation de fluide thermorégulé, et
- une vanne de sélection ayant
   - un orifice de sortie connecté à ladite seconde chambre,
   - un premier orifice d'entrée connecté audit générateur de fluide auxiliaire,
   - un second orifice d'entrée connecté à l'atmosphère, et
   - n sélecteur propre à établir une liaison entre ledit orifice de sortie et sélectivement le premier ou le second orifice d'entrée.

Afin de permettre la mise à la pression atmosphérique du fluide thermorégulé dans le circuit de fluide thermorégulé, il est souhaitable que le second circuit de fluide sous pression comprenne des moyens d'échappement vers l'extérieur dudit fluide auxiliaire sous pression.

Dans une réalisation pratique, le circuit de fluide thermorégulé peut comprendre :
- une première branche principale comprenant une vanne, ladite enceinte étant raccordée de manière fluidique à ladite première branche principale entre ladite vanne et un raccordement desdits moyens de raccordement fluidique du support à un moule respectif ;
- une seconde branche principale comprenant une vanne et apte à être raccordée à ladite première branche principale par l'intermédiaire desdits moyens de raccordement fluidique et dudit moule ;
- une branche transversale de thermorégulation reliant lesdites première et seconde branches principales, dans laquelle est intégré un thermorégulateur de fluide sous pression ainsi que des moyens de pompage pour la circulation dudit fluide thermorégulé sous pression dans ledit circuit ;
- une branche transversale de dérivation reliant lesdites première et seconde branches principales, dans laquelle est placée une vanne qui, dans sa position fermée, permet la circulation du fluide thermorégulé sous pression dans ladite branche transversale de thermorégulation, dans les première et seconde branches principales ainsi que dans le moule raccordé à son support respectif, ladite vanne de ladite première branche principale étant située entre ladite enceinte et un raccordement de ladite branche transversale de dérivation tandis que ladite vanne de ladite seconde branche principale est située entre un raccordement desdits moyens de raccordement fluidique du support à un moule respectif et un raccordement de la branche transversale de dérivation.

Afin de s'assurer du bon fonctionnement de la vanne de la seconde branche principale, ladite seconde branche principale peut avantageusement comprendre deux manomètres situés respectivement de part et d'autre de ladite vanne intégrée dans ladite seconde branche principale.

A titre de sécurité supplémentaire pour s'assurer du bon fonctionnement de la vanne de la seconde branche principale, un pressostat peut être prévu dans la seconde branche principale entre la vanne de la seconde branche principale et ledit raccordement desdits moyens de raccordement fluidique du support à ladite seconde branche principale.

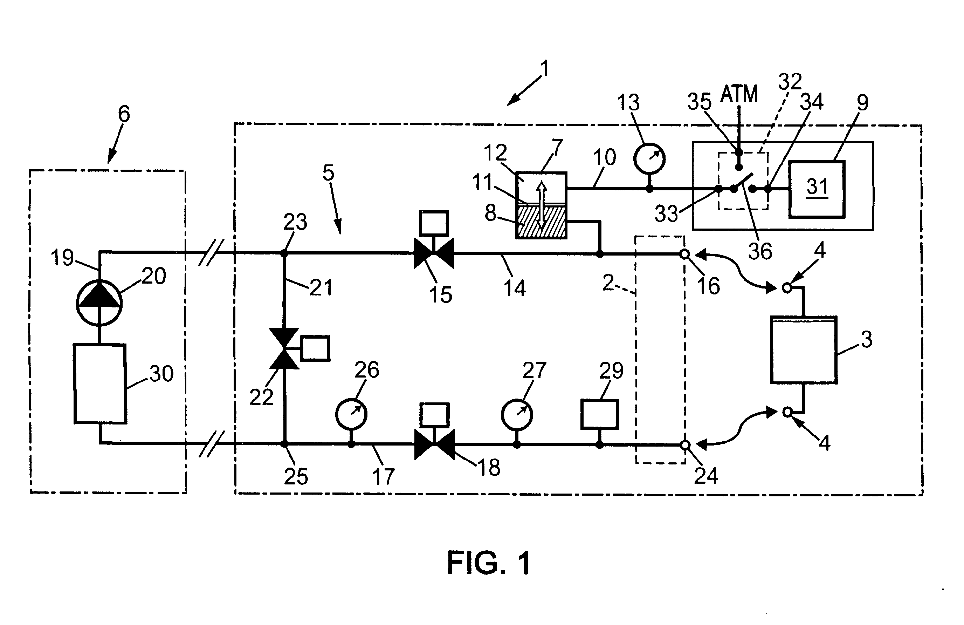

La présente invention sera mieux comprise à la lecture de la description qui suit d'un exemple préféré, uniquement illustratif et nullement limitatif de la portée de l'invention. Dans cette description, on se réfère au dessin annexé sur lequel la figure 1 unique est un schéma d'un circuit de fluide thermorégulé formé dans une installation de soufflage selon l'invention.

Sur le schéma de la figure 1, une installation 1 (schématisée sous forme d'un bloc) de soufflage de corps creux, notamment de récipients tels que des bouteilles, en matière thermoplastique comprend au moins un support 2 de moule (schématisé sous forme d'un bloc) auquel peut être solidarisé de façon détachable un moule 3 de soufflage amovible (schématisé sous forme d'un bloc). De façon courante pour des productions en grandes séries, l'installation 1 peut être agencée sous forme d'un carrousel tournant à la périphérie duquel est prévue une pluralité de supports 2 de moules auxquels peuvent être solidarisés de façon détachable une pluralité de moules 3 de soufflage amovibles respectifs.

Chaque support 2 comprend des moyens 4 de raccordement fluidique avec un moule 3 respectif permettant ainsi la formation d'au moins un circuit 5 de circulation d'un fluide thermorégulé sous pression à travers au moins un desdits supports 2 et un desdits moules 3 respectifs, la régulation thermique du fluide étant obtenue à l'aide de moyens thermorégulateurs 6. De manière optionnelle, au moins deux moules 3 peuvent être raccordés sur un même circuit 5 de fluide de régulation de température.

Le fluide thermorégulé peut être soit de l'eau, soit de l'huile et permet ainsi le chauffage du moule, des canaux de circulation dudit fluide thermorégulé étant usinés à l'intérieur du moule.

De manière connue en soi, des moyens de fermeture automatique du circuit 5 sont prévus dans le support 2. Par exemple, ces moyens de fermeture automatique peuvent se présenter sous la forme d'une valve d'arrêt à fermeture automatique et sont actionnés lors d'un arrêt de l'installation 1, par exemple soit suite à un incident technique sur l'installation 1, soit suite à une ouverture de portes permettant d'accéder au coeur de l'installation 1.

Le circuit 5 de fluide thermorégulé est connecté de manière fluidique à une enceinte 7 qui comporte une chambre 8 à volume variable.

Des moyens 9 générateurs de fluide auxiliaire sous une pression réglable peuvent faire varier la pression dudit fluide auxiliaire entre une pression maximale sensiblement égale à la pression du fluide thermorégulé sous pression présent dans ledit circuit 5 et une pression minimale sensiblement égale à la pression atmosphérique. Lesdits moyens 9 générateurs sont connectés à l'enceinte 7 à l'extérieur de la chambre 8 de manière que ladite chambre 8 à volume variable soit soumise à la contre-pression dudit fluide auxiliaire à pression réglable.

Ainsi, avant que le moule 3 soit désolidarisé de son support 2 respectif, la contre-pression dudit fluide auxiliaire est abaissée de sa pression maximale à sensiblement sa pression minimale et le fluide thermorégulé sous pression peut se détendre dans ladite chambre 8 à volume variable jusqu'à ce que sa pression atteigne sensiblement la pression atmosphérique. Lorsque la désolidarisation du moule 3 se produit, la pression du fluide thermorégulé présent dans le circuit 5 a donc été abaissée sensiblement à la pression atmosphérique et, même si les moyens de fermeture automatique du circuit 5 sont en dysfonctionnement, on réduit les risques de projection de fluide thermorégulé sous pression hors du support 2.

Plus précisément, les moyens 9 générateurs de fluide auxiliaire sous pression réglable peuvent être inclus dans un second circuit 10 de fluide auxiliaire sous pression, tel que de l'air sous pression. Le second circuit 10 peut avantageusement comprendre des moyens d'échappement vers l'extérieur dudit fluide auxiliaire sous pression.

Bien que de nombreuses réalisations soient envisageables pour constituer l'enceinte 7 incluant la chambre 8 à volume variable, un mode de réalisation qui semble intéressant en pratique dans un contexte de mise en oeuvre industrielle consiste en ce que l'enceinte 7 comprenne une paroi 11 interne, parfaitement étanche, du type mobile ou déformable, séparant ladite enceinte 7 en deux chambres respectivement 8 et 12 de volumes internes respectifs variables. Une première chambre, qui n'est autre que la chambre 8 précitée, est connectée de manière fluidique au circuit 5 de fluide thermorégulé sous pression ; une seconde chambre 12, séparée de ladite chambre 8 par la paroi 11, est connectée de manière fluidique aux moyens 9 générateurs de fluide auxiliaire sous pression réglable, notamment au second circuit 10 de fluide auxiliaire sous pression.

Selon une forme possible de réalisation (non montré), l'enceinte 7 peut être une vessie avec une paroi 11 constituée sous forme d'une membrane intégrée déformable (par exemple en caoutchouc) délimitant lesdites première et seconde chambres 8, 12.

Selon une forme intéressante de réalisation, ladite enceinte 7 peut être une enceinte sensiblement rigide. Dans ce cas, une possibilité consiste en ce que ladite enceinte 7 soit une enceinte sensiblement rigide comportant une paroi 11 sous forme d'une membrane interne déformable (par exemple du type diaphragme) délimitant lesdites première et seconde chambres 8, 12. Une autre possibilité intéressante consiste, comme représenté à la figure 1, en ce que ladite enceinte 7 soit une enceinte sensiblement rigide comportant une paroi 11 interne déplaçable délimitant lesdites première et seconde chambres 8, 12 ; un exemple préféré de réalisation peut alors consister en ce que ladite enceinte 7 soit agencée sous forme d'un vérin, la paroi 11 étant constituée par un piston mobile délimitant lesdites première et seconde chambres 8, 12.

Comme montré à la figure 1, le second circuit 10 de fluide auxiliaire sous pression peut inclure un manomètre 13 apte à mesurer la pression dudit fluide auxiliaire injecté sous pression dans la seconde chambre 12 de l'enceinte 7.

Bien qu'en principe les moyens 9 générateurs puissent être agencés pour délivrer un fluide auxiliaire sous une pression quelconque ajustable, il est cependant plus simple (et cela répond parfaitement aux besoins) de faire en sorte que lesdits moyens 9 générateurs de fluide auxiliaire soient du type à fonctionnement tout ou rien, propre sélectivement soit à délivrer un fluide auxiliaire sous une pression sensiblement égale à la pression du fluide thermorégulé dans ledit circuit 5 de circulation de fluide thermorégulé, soit à raccorder ladite seconde chambre 12 à l'atmosphère ATM.

De façon concrète, lesdits moyens 9 générateurs de fluide auxiliaire peuvent comprendre, comme représenté à la figure 1 :
- un générateur 31 de fluide auxiliaire sous une pression sensiblement égale à la pression du fluide thermorégulé dans ledit circuit 5 de circulation de fluide thermorégulé, et
- une vanne 32 de sélection ayant
   - un orifice 33 de sortie connecté à ladite seconde chambre 12,
   - un premier orifice 34 d'entrée connecté audit générateur 31 de fluide auxiliaire,
   - un second orifice 35 d'entrée connecté à l'atmosphère ATM, et
   - un sélecteur 36 propre à établir une liaison entre ledit orifice 33 de sortie et sélectivement le premier 34 ou le second 35 orifice d'entrée.

Le basculement du sélecteur 36 d'un orifice de sortie à l'autre est couplé à la commande arrêt/marche de l'installation de manière que la mise à l'atmosphère ATM de la seconde chambre 12 se produise automatiquement lorsque survient une commande d'arrêt de l'installation, et inversement que la liaison de la chambre 12 avec le générateur 31 de fluide auxiliaire sous pression se produise automatiquement lorsque survient un ordre de mise en marche de l'installation. En outre, le passage du sélecteur 36 sur l'orifice 35 de sortie raccordé à l'atmosphère ATM peut de préférence être couplé avec une commande d'arrêt du générateur 31 de fluide auxiliaire sous pression.

Dans un exemple de réalisation pratique montré à la figure 1, le circuit 5 de fluide thermorégulé comprend :
- une première branche 14 principale comprenant une vanne 15 (préférentiellement du type électrovanne), et l'enceinte 7 est raccordée de manière fluidique à cette première branche 14 principale entre la vanne 15 et un raccordement 16 desdits moyens 4 de raccordement fluidique du support 2 sur un moule 3 ;
- une seconde branche 17 principale comprenant une vanne 18 (préférentiellement du type électrovanne), et apte à être raccordée à la première branche 14 principale par l'intermédiaire desdits moyens 4 de raccordement fluidique et du moule 3 ;
- une branche 19 transversale de thermorégulation reliant la première branche 14 principale à la seconde branche 17 principale, dans laquelle sont disposés les moyens 6 thermorégulateurs pouvant comprendre un thermorégulateur 30 de fluide (qui peut être de tout type connu en soi) ainsi que des moyens 20 de pompage permettant la circulation du fluide dans le circuit 5 de fluide thermorégulé ;
- une branche 21 transversale de dérivation reliant la première branche 14 principale à la seconde branche 17 principale sur laquelle est placée une vanne 22 (préférentiellement du type électrovanne), qui, dans sa position fermée, permet la circulation du fluide thermorégulé dans la branche 19 transversale de thermorégulation, dans les première et seconde branches 14, 17 principales ainsi que dans le moule 3 raccordé à son support 2 respectif, la vanne 15 de la première branche 14 principale étant située entre l'enceinte 7 et un raccordement 23 de la branche 21 transversale de dérivation tandis que la vanne 18 de la seconde branche 17 principale est située entre un raccordement 24 des moyens 4 de raccordement fluidique du support 2 sur un moule 3 respectif et un raccordement 25 de la branche 21 transversale de dérivation.

La seconde branche 17 principale comprend deux manomètres 26, 27 situés respectivement de part et d'autre de la vanne 18 intégrée dans la seconde branche 17, et plus précisément un premier manomètre 26 intégré entre le raccordement 25 de la branche 21 transversale de dérivation et la vanne 18 de la seconde branche 17 principale et un second manomètre 27 intégré entre la vanne 18 de la seconde branche 17 principale et un raccordement 24 des moyens 4 de raccordement fluidique du support 2 respectif. Il est ainsi possible de vérifier le bon fonctionnement de la vanne 18 de la seconde branche 17 principale de par la présence de ces manomètres 26, 27 de part et d'autre de la vanne 18.

Afin de s'assurer que la vanne 18 a bien fermé la seconde branche 17 principale et à titre de sécurité supplémentaire, un pressostat 29 peut être prévu dans la seconde branche 17 principale entre la vanne 18 de la seconde branche 17 principale et le raccordement 24 des moyens 4 de raccordement fluidique du support 2, et plus précisément entre le manomètre 27 et le raccordement 24.

Grâce à l'installation 1 de soufflage de corps creux telle que décrite ci-dessus, il est ainsi possible de réguler la pression d'un fluide dans un circuit 5 de fluide thermorégulé, en faisant varier le volume du fluide thermorégulé dans l'enceinte 7 comprenant au moins une chambre 8 de volume variable et en modifiant la pression exercée sur le volume de fluide thermorégulé enfermé dans la chambre 8 de l'enceinte 7.

De manière plus précise, suite à un arrêt de l'installation 1 de soufflage et afin de permettre une désolidarisation du moule 3 de son support 2 sans risques de projection de fluide thermorégulé sous pression, on procède de la manière suivante :
- on ferme la vanne 15 de la première branche 14 principale et on ferme la vanne 18 de la seconde 17 branche principale ;
- on ouvre la vanne 22 de la branche 21 transversale de dérivation, de sorte qu'est ainsi formée une boucle fermée dans le circuit 5, et plus précisément dans la partie thermorégulatrice du circuit 5, dans laquelle le fluide devant être régulé thermiquement peut circuler (la boucle fermée comprend avantageusement la branche 21 transversale de dérivation ainsi que la branche 19 transversale de thermorégulation). Des moyens 20 de pompage permettent avantageusement une circulation continue du fluide thermorégulé dans la boucle fermée, ce qui permet d'éviter une dégradation par surchauffe de ce fluide thermorégulé au contact de la résistance chauffante du thermorégulateur 30, dégradation qui serait susceptible de se produire en cas de stagnation du fluide thermorégulé au contact de la résistance chauffante, plus particulièrement quand le fluide thermorégulé est de l'huile ;
- on génère, dans la chambre 8 de l'enceinte 7, une pression inférieure à la pression du fluide thermorégulé dans le circuit 5. En général, le second circuit 10 est amené à la pression atmosphérique à l'aide des moyens d'échappement dont est pourvu ledit second circuit et/ou les moyens 9 générateurs, le manomètre 13 indiquant alors une pression nulle ;
- on laisse se détendre le fluide thermorégulé sous pression dans l'enceinte 7, ce qui s'accompagne d'une augmentation du volume du fluide thermorégulé dans la chambre 8 de l'enceinte 7. Ainsi la pression du fluide thermorégulé présent dans la partie du circuit 5 sur laquelle est connecté l'enceinte 7 diminue jusqu'à atteindre la pression générée par le second circuit 10, en général la pression atmosphérique. Il n'existe alors plus de risques de projections de fluide thermorégulé hors du circuit 5 au moment de la désolidarisation du moule 3 de son support 2.

De même, après la solidarisation ou connexion du moule 3 sur son support 2 respectif et afin de permettre la remise en route de l'installation 1 de soufflage, on peut procéder de la façon suivante :
- on applique, sur le volume de fluide thermorégulé présent dans la chambre 8 de l'enceinte 7, une pression supérieure à la pression du fluide thermorégulé dans le circuit 5 (on applique une pression sensiblement égale à la pression du fluide circulant dans la boucle fermée du circuit 5 composée de la branche 19 transversale de thermorégulation et la branche 21 transversale de dérivation) ;
- on comprime le fluide thermorégulé sous pression dans l'enceinte 7, ce qui entraîne une diminution du volume du fluide thermorégulé dans la chambre 8 qui réduit de volume. Ainsi, le fluide thermorégulé est pressurisé dans le circuit 5 après que le moule 3 ait été connecté sur le circuit 5. Il en résulte que le moule 3 est ainsi raccordé sur un circuit 5 dont le fluide n'est pas encore sous pression, et que ce fluide n'est mis sous pression qu'après la solidarisation du moule 3 à son support 2, de sorte qu'il n'est plus nécessaire de développer des efforts de contrepression pour effectuer la solidarisation du moule 3 à son support 2 ;
- on ouvre la vanne 15 de la première branche 14 principale, on ouvre la vanne 18 de la seconde branche 17 principale et on ferme la vanne 22 de la branche transversale 21 de dérivation.

Il existe donc selon l'invention des moyens de fermeture du circuit 5 de circulation du fluide thermorégulé sous pression qui sont constitués par les vannes 15, 18 des première et seconde branches 14, 17 principales et qui permettent de former une partie du circuit 5, dans laquelle se trouvent le moule 3 ainsi que l'enceinte 7, dont la pression du fluide peut être régulée par détente de ce fluide dans l'enceinte 7. Cela permet de réduire la pression du fluide circulant dans le moule 2 et ainsi de réduire les risques de projection de ce fluide lors de la désolidarisation du moule 3 de son support 2.

## Revendications

1. Installation (1) de soufflage de corps creux, notamment de récipients tels que des bouteilles, en matière thermoplastique, comprenant au moins un support (2) de moule auquel peut être solidarisé un moule (3) amovible respectif par l'intermédiaire de moyens (4) de raccordement fluidique, cette installation comprenant au moins un circuit (5) de fluide thermorégulé sous pression formé à travers au moins ledit support (2) et ledit moule (3) respectif, des moyens de fermeture automatique dudit circuit (5) étant prévus dans au moins ledit support (2), **caractérisée en ce qu'**elle comprend :
- au moins une enceinte (7) qui comporte au moins une chambre (8) à volume variable raccordée de manière fluidique audit circuit (5) de fluide thermorégulé sous pression, et
- des moyens (9) générateurs de fluide auxiliaire sous une pression réglable pouvant varier entre une pression maximale sensiblement égale à la pression du fluide thermorégulé sous pression présent dans ledit circuit (5) et une pression minimale sensiblement égale à la pression atmosphérique, lesdits moyens (9) générateurs étant connectés à ladite enceinte (7) à l'extérieur de ladite chambre (8) de manière que ladite chambre (8) à volume variable soit soumise à la contre-pression dudit fluide auxiliaire à pression réglable,
ce grâce à quoi, avant que le moule (3) soit désolidarisé de son support (2) respectif, la contre-pression dudit fluide auxiliaire est abaissée de sa pression maximale à sensiblement sa pression minimale et le fluide thermorégulé sous pression peut se détendre dans ladite chambre (8) à volume variable jusqu'à ce que sa pression atteigne sensiblement la pression atmosphérique, de manière à ainsi réduire les risques de projection du fluide thermorégulé sous pression hors du support (2) lorsque le moule (3) est désolidarisé de son support (2) respectif alors que lesdits moyens de fermeture automatique dudit circuit (5) sont en dysfonctionnement.

2. Installation selon la revendication 1, **caractérisée en ce que** ladite enceinte (7) comprend une paroi (11) interne mobile séparant ladite enceinte en deux chambres (8, 12) de volumes respectifs variables, ladite première chambre (8) étant connectée de manière fluidique audit circuit (5) de fluide thermorégulé sous pression et une seconde chambre (12) étant connectée de manière fluidique auxdits moyens (9) générateurs de fluide auxiliaire sous une pression réglable.

3. Installation selon la revendication 2, **caractérisée en ce que** ladite enceinte (7) est une vessie comportant une membrane interne déformable délimitant lesdites première et seconde chambres (8, 12).

4. Installation selon la revendication 2, **caractérisée en ce que** ladite enceinte (7) est une enceinte sensiblement rigide comportant une membrane interne déformable délimitant lesdites première et seconde chambres (8, 12).

5. Installation selon la revendication 2, **caractérisée en ce que** ladite enceinte (7) est une enceinte sensiblement rigide comportant une paroi interne déplaçable délimitant lesdites première et seconde chambres (8, 12).

6. Installation selon la revendication 5, **caractérisée en ce que** ladite enceinte (7) est un vérin avec un piston délimitant lesdites première et seconde chambres (8, 12).

7. Installation selon l'une quelconque des revendications 2 à 6, **caractérisée en ce que** lesdits moyens (9) générateurs de fluide auxiliaire sont du type à fonctionnement tout ou rien, propre sélectivement soit à délivrer un fluide auxiliaire sous une pression sensiblement égale à la pression du fluide thermorégulé dans ledit circuit (5) de circulation de fluide thermorégulé, soit à raccorder ladite seconde chambre (12) à l'atmosphère.

8. Installation selon la revendication 7, **caractérisée en ce que** lesdits moyens (9) générateurs de fluide auxiliaire comprennent :
- un générateur (31) de fluide auxiliaire sous une pression sensiblement égale à la pression du fluide thermorégulé dans ledit circuit (5) de circulation de fluide thermorégulé, et
- une vanne (32) de sélection ayant
. un orifice de sortie connecté à ladite seconde chambre (12),
. un premier orifice d'entrée connecté audit générateur (31) de fluide auxiliaire,
. un second orifice d'entrée connecté à l'atmosphère, et
. un sélecteur propre à établir une liaison entre ledit orifice de sortie et sélectivement le premier ou le second orifice d'entrée.

9. Installation selon l'une quelconque des revendications 1 à 8, **caractérisée en ce que** ledit circuit (5) de fluide thermorégulé sous pression comprend :
- une première branche (14) principale comprenant une vanne (15), ladite enceinte (7) étant raccordée de manière fluidique à ladite première branche (14) principale entre ladite vanne (15) et un raccordement (16) desdits moyens (4) de raccordement fluidique du support (2) à un moule (3) respectif ;
- une seconde branche (17) principale comprenant une vanne (18) et apte à être raccordée à ladite première branche (14) principale par l'intermédiaire desdits moyens (4) de raccordement fluidique et dudit moule (3) ;
- une branche (1) transversale de thermorégulation reliant lesdites première et seconde branches (14, 17) principales, dans laquelle est intégré un thermorégulateur (30) de fluide sous pression ainsi que des moyens (20) de pompage pour la circulation dudit fluide thermorégulé sous pression dans ledit circuit (5) ;
- une branche (21) transversale de dérivation reliant lesdites première et seconde branches (14, 17) principales, dans laquelle est placée une vanne (22) qui, dans sa position fermée, permet la circulation du fluide thermorégulé sous pression dans ladite branche (19) transversale de thermorégulation, dans les première et seconde branches (14, 17) principales ainsi que dans le moule (3) raccordé à son support (2) respectif, ladite vanne (15) de ladite première branche (14) principale étant située entre ladite enceinte (7) et un raccordement (23) de ladite branche (21) transversale de dérivation tandis que ladite vanne (18) de ladite seconde branche (17) principale est située entre un raccordement (24) desdits moyens (4) de raccordement fluidique du support (2) à un moule (3) respectif et un raccordement (25) de la branche (21) transversale de dérivation.

10. Installation selon la revendication 9, **caractérisée en ce que** ladite seconde branche (17) principale comprend deux manomètres (26, 27) situés respectivement de part et d'autre de ladite vanne (18) intégrée dans ladite seconde branche (17) principale.

11. Installation selon la revendication 9 ou 10, **caractérisée en ce qu'**un pressostat (29) est prévu dans ladite seconde branche (17) principale entre ladite vanne (18) de ladite seconde branche (17) principale et ledit raccordement (24) desdits moyens (4) de raccordement fluidique du support (2) à ladite seconde branche (17) principale.

## Claims

1. Installation (1) for blow moulding hollow thermoplastic bodies, especially containers such as bottles, comprising at least one mould carrier (2) to which a respective removable mould (3) can be connected via fluid connection means (4), this installation comprising at least one pressurized temperature-controlled fluid circuit (5) passing through at least said carrier (2) and said respective mould (3), and automatic means for shutting off said circuit (5) being provided in at least said carrier (2),
said installation being **characterized in that** it comprises:
- at least one enclosure (7) that comprises at least one variable-volume chamber (8) provided with a fluid connection to said pressurized temperature-controlled fluid circuit (5), and
- adjustably pressurized auxiliary fluid generating means (9) able to vary between a maximum pressure substantially equal to the pressure of the pressurized temperature-controlled fluid present in said circuit (5) and a minimum pressure substantially equal to atmospheric pressure, said generating means (9) being connected to said enclosure (7) outside of said chamber (8) in such a way that said variable-volume chamber (8) is subjected to the opposing pressure of said adjustable-pressure auxiliary fluid,
by which means, before the mould (3) is disconnected from its respective carrier (2), the opposing pressure of said auxiliary fluid is reduced from its maximum pressure to substantially its minimum pressure, and the pressure of the pressurized temperature-controlled fluid can be reduced in said variable-volume chamber (8) until it is substantially atmospheric pressure, in such a way as to reduce the risk of pressurized temperature-controlled fluid being sprayed out of the carrier (2) if the mould (3) is disconnected from its respective carrier (2) when said means for automatically shutting off said circuit (5) are not working.

2. Installation according to Claim 1, **characterized in that** said enclosure (7) comprises a movable internal wall (11) separating said enclosure into two chambers (8, 12) of variable respective volumes, said first chamber (8) having a fluid connection to said pressurized temperature-controlled fluid circuit (5) and a second chamber (12) having a fluid connection to said adjustably pressurized auxiliary fluid generating means (9).

3. Installation according to Claim 2, **characterized in that** said enclosure (7) is a bladder comprising a deformable internal diaphragm defining said first and second chambers (8, 12).

4. Installation according to Claim 2, **characterized in that** said enclosure (7) is a substantially rigid enclosure comprising a deformable internal diaphragm defining said first and second chambers (8, 12).

5. Installation according to Claim 2, **characterized in that** said enclosure (7) is a substantially rigid enclosure comprising a movable internal wall defining said first and second chambers (8, 12).

6. Installation according to Claim 5, **characterized in that** said enclosure (7) is a cylinder with a piston defining said first and second chambers (8, 12).

7. Installation according to any one of Claims 2 to 6, **characterized in that** said auxiliary fluid
generating means (9) operate on an all-or-nothing basis and can selectively either deliver an auxiliary fluid at a pressure substantially equal to that of the temperature-controlled fluid in said temperature-controlled fluid circuit (5), or connect said second chamber (12) to atmosphere.

8. Installation according to Claim 7, **characterized in that** said auxiliary fluid generating means (9) comprise:
- a generator (31) of auxiliary fluid at a pressure substantially equal to that of the temperature-controlled fluid in said temperature-controlled fluid circuit (5), and
- a selection valve (32) having
. an outlet orifice connected to said second chamber (12),
. a first inlet orifice connected to said auxiliary fluid generator (31),
. a second inlet orifice connected to atmosphere,
and
. a selector for connecting said outlet orifice to either the first or the second inlet orifice.

9. Installation according to any one of Claims 1 to 8, **characterized in that** said pressurized temperature-controlled fluid circuit (5) comprises:
- a first main line (14) comprising a valve (15), said enclosure (7) being provided with a fluid connection to said first main line (14) between said valve (15) and a connection (16) for said means (4) of fluid connection of the carrier (2) to a respective mould (3);
- a second main line (17) comprising a valve (18) and connectable to said first main line (14) via said fluid connection means (4) and said mould (3);
- a transverse temperature-controlling line (1) connecting said first and second main lines (14, 17), which line includes a pressurized fluid temperature controller (30) and means (20) for pumping said pressurized temperature-controlled fluid around said circuit (5); and
- a transverse bypass line (21) connecting said first and second main lines (14, 17), which bypass line includes a valve (22) which, in its closed position, allows the pressurized temperature-controlled fluid to flow through said transverse temperature-controlling line (19), through the first and second main lines (14, 17), and through the mould (3) connected to its respective carrier (2), said valve (15) on said first main line (14) being positioned between said enclosure (7) and a connection (23) of said transverse bypass line (21) while said valve (18) on said second main line (17) is positioned between a connection (24) for said means (4) of fluid connection of the carrier (2) to a respective mould (3) and a connection (25) to the transverse bypass line (21).

10. Installation according to Claim 9, **characterized in that** said second main line (17) comprises two manometers (26, 27) positioned one on either side of said valve (18) integrated in said second main line (17).

11. Installation according to Claim 9 or 10, **characterized in that** a pressure switch (29) is provided on said second main line (17) between said valve (18) on said second main line (17) and said connection (24) for said means (4) of fluid connection of the carrier (2) to said second main line (17).

## Patentansprüche

1. Anlage (1) zum Blasformen von Hohlkörpern, insbesondere Behältern, wie zum Beispiel Flaschen, aus Thermoplastmaterial, die mindestens einen Formträger (2) aufweist, mit dem eine abnehmbare Form (3) jeweils über Mittel zum fluidischen Verbinden (4) fest verbunden werden kann, wobei diese Anlage mindestens einen Kreislauf (5) für wärmereguliertes Fluid unter Druck aufweist, der mindestens durch den Träger (2) und die jeweilige Form (3) hindurch ausgebildet ist, wobei automatische Schließmittel des Kreislaufs (5) mindestens in dem Träger (2) vorgesehen sind, **dadurch gekennzeichnet, dass** sie Folgendes aufweist:
- mindestens einen Einschluss (7), der mindestens eine Kammer (8) mit variablem Volumen aufweist, die fluidisch mit dem Kreislauf (5) für wärmereguliertes Fluid unter Druck verbunden ist, und
- Mittel (9) zum Erzeugen von Hilfsfluid unter einem einstellbaren Druck, der zwischen einem Höchstdruck, der im Wesentlichen gleich dem Druck des wärmeregulierten Fluids unter Druck, das in dem Kreislauf (5) gegenwärtig ist, ist, und einem Mindestdruck, der im Wesentlichen gleich dem Luftdruck ist, variieren kann, wobei die Erzeugungsmittel (9) mit dem Einschluss (7) außerhalb der Kammer (8) derart verbunden sind, dass die Kammer (8) mit variablem Volumen dem Gegendruck des Hilfsfluids mit einstellbarem Druck ausgesetzt ist,
so dass, bevor die Form (3) von ihrem jeweiligen Träger (2) getrennt wird, der Gegendruck des Hilfsfluids von seinem Höchstdruck auf im Wesentlichen seinen Mindestdruck gesenkt wird und sich das wärmeregulierte Fluid unter Druck in der Kammer (8) mit variablem Volumen entspannen kann, bis sein Druck den Luftdruck erreicht, so dass daher die Gefahren des Spritzens des wärmeregulierten Fluids unter Druck aus dem Träger (2) verringert werden, wenn die Form (3) von ihrem jeweiligen Träger (2) getrennt wird, während die automatischen Schließmittel des Kreislaufs (5) eine Panne aufweisen.

2. Anlage nach Anspruch 1, **dadurch gekennzeichnet, dass** der Einschluss (7) eine bewegliche Innenwand (11) aufweist, die den Einschluss in zwei Kammern (8, 12) mit jeweiligem variablem Volumen teilt, wobei die erste Kammer (8) fluidisch mit dem Kreislauf (5) für wärmereguliertes Fluid unter Druck verbunden ist, und eine zweite Kammer (12) fluidisch mit den Mitteln (9) zum Erzeugen von Hilfsfluid unter einem einstellbaren Druck verbunden ist.

3. Anlage nach Anspruch 2, **dadurch gekennzeichnet, dass** der Einschluss (7) eine Blase ist, die eine verformbare innere Membran aufweist, die die erste und die zweite Kammer (8, 12) abgrenzt.

4. Anlage nach Anspruch 2, **dadurch gekennzeichnet, dass** der Einschluss (7) ein im Wesentlichen starrer Einschluss ist, der eine innere verformbare Membran aufweist, die die erste und die zweite Kammer (8, 12) abgrenzt.

5. Anlage nach Anspruch 2, **dadurch gekennzeichnet, dass** der Einschluss (7) ein im Wesentlichen starrer Einschluss
ist, der eine verlagerbare Innenwand aufweist, die die erste und die zweite Kammer (8, 12) abgrenzt.

6. Anlage nach Anspruch 5, **dadurch gekennzeichnet, dass** der Einschluss (7) ein Zylinder mit einem Kolben ist, der die erste und die zweite Kammer (8, 12) abgrenzt.

7. Anlage nach einem der Ansprüche 2 bis 6, **dadurch gekennzeichnet, dass** die Mittel (9) zum Erzeugen von Hilfsfluid des Typs mit Alles-oder-Nichts-Betrieb sind, die wahlweise jeweils ein Hilfsfluid unter einem Druck, der im Wesentlichen gleich dem Druck des wärmeregulierten Fluids in dem Kreislauf (5) zur Zirkulation wärmeregulierten Fluids ist, liefern, oder die zweite Kammer (12) mit der Umgebung verbinden können.

8. Anlage nach Anspruch 7, **dadurch gekennzeichnet, dass** die Mittel (9) zum Erzeugen von Hilfsfluid Folgendes aufweisen:
- einen Generator (31) für Hilfsfluid unter einem Druck, der im Wesentlichen gleich dem Druck des wärmeregulierten Fluids in dem Kreislauf (5) zur Zirkulation von wärmereguliertem Fluid ist, und
- ein Auswahlventil (32), das
• eine Ausgangsöffnung hat, die mit der zweiten Kammer (12) verbunden ist,
• eine erste Eingangsöffnung hat, die mit dem Generator (31) für Hilfsfluid verbunden ist,
• eine zweite Eingangsöffnung hat, die mit der Umgebung verbunden ist, und
• einen Auswähler hat, der eine Verbindung zwischen der Ausgangsöffnung und wahlweise der ersten oder der zweiten Eingangsöffnung herstellen kann.

9. Anlage nach einem der Ansprüche 1 bis 8, **dadurch gekennzeichnet, dass** der Kreislauf (5) für wärmereguliertes Fluid unter Druck Folgendes aufweist:
- einen ersten Hauptzweig (14), der ein Ventil (15) aufweist, wobei der Einschluss (7) fluidisch mit dem ersten Hauptzweig (14) zwischen dem Ventil (15) und einem Anschluss (16) der Mittel (4) zum fluidischen Verbinden des Trägers (2) mit einer jeweiligen Form (3) verbunden ist;
- einen zweiten Hauptzweig (17), der ein Ventil (18) aufweist und an den ersten Hauptzweig (14) über die Mittel (4) zum fluidischen Anschließen und über die Form (3) angeschlossen werden kann;
- einen Querzweig (1) zum Wärmeregulieren, der den ersten und den zweiten Hauptzweig (14, 17) verbindet, in den ein Wärmeregulierer (30) für Fluid unter Druck sowie Mittel (20) zum Pumpen für die Zirkulation des wärmeregulierten Fluids unter Druck in dem Kreislauf (5) integriert sind;
- einen Abzweigquerzweig (21), der den ersten und den zweiten Hauptzweig (14, 17) verbindet, in dem ein Ventil (22) platziert ist, das in seiner geschlossenen Position die Zirkulation des wärmeregulierten Fluids unter Druck in dem Wärmeregulier-Querzweig (19), in dem ersten und dem zweiten Hauptzweig (14, 17) sowie in der Form (3) erlaubt, die an ihren jeweiligen Träger (2) angeschlossen ist, wobei das Ventil (15) des ersten Hauptzweigs (14) zwischen dem Einschluss (7) und einem Anschluss (23) des Abzweigquerzweigs (21) liegt, während das Ventil (18) des zweiten Hauptzweigs (17) zwischen einem Anschluss (24) der Mittel (4) zum fluidischen Anschließen des Trägers (2) an eine jeweilige Form (3) und einem Anschluss (25) des Abzweigquerzweigs (21) liegt.

10. Anlage nach Anspruch 9, **dadurch gekennzeichnet, dass** der zweite Hauptzweig (17) zwei Druckmesser (26, 27) aufweist, die jeweils zu beiden Seiten des Ventils (18), das in den zweiten Hauptzweig (17) integriert ist, liegen.

11. Anlage nach Anspruch 9 oder 10, **dadurch gekennzeichnet, dass** ein Druckregler (29) in dem zweiten Hauptzweig (17) zwischen dem Ventil (18) des zweiten Hauptzweigs (17) und dem Anschluss (24) der Mittel (4) zum fluidischen Anschließen des Trägers (2) an den zweiten Hauptzweig (17) vorgesehen ist.
